# EUROPÄISCHE PATENTSCHRIFT

(11) **EP 3 727 188 B1**
(45) Veröffentlichungstag und Bekanntmachung des Hinweises auf die Patenterteilung: **02.02.2022**
(21) Anmeldenummer: 18836458.2
(22) Anmeldetag: 20.12.2018
(51) Int. Cl.: A61C 8/00

(54) **ZAHNIMPLANTAT**
DENTAL IMPLANT
IMPLANT DENTAIRE

(30) Priorität: 20.12.2017 DE 202017107752 U
(43) Veröffentlichungstag der Anmeldung: 28.10.2020
(73) Patentinhaber: Straumann Holding AG, 4052 Basel (CH)
(72) Erfinder: KUNZ, Marcel, 4052 Basel (CH)
(74) Vertreter: Modiano, Gabriella Diana
(86) Internationale Anmeldenummer: PCT/EP2018/000576
(87) Internationale Veröffentlichungsnummer: WO 2019/120608

(56) Entgegenhaltungen:
- EP-A1- 0 963 738
- DE-U1-202006 005 321
- US-A- 3 675 328
- US-A1- 2007 009 854

## Beschreibung

Die vorliegende Erfindung betrifft ein Zahnimplantat mit einem abtrennbaren Implantatfortsatz gemäß dem Oberbegriff von Anspruch 1. Die vorliegende Erfindung betrifft auch ein Verfahren gemäß dem Oberbegriff von Anspruch 12 und eine Verwendung gemäß dem Oberbegriff von Anspruch 13.

Zahnimplantate müssen vom Hersteller zum jeweiligen behandelnden Arzt so transportiert werden, dass sie dort sicher und unbeschädigt und keinesfalls in irgendeiner Weise kontaminiert oder beschädigt ankommen. Dafür sind spezielle Behälter als Verpackungen entwickelt worden wie beispielsweise offenbart in EP2279708B1. Meist wird im Stand der Technik das jeweilige Zahnimplantat dazu am coronalen Ende, das nach einer Implantation mit einem Abutment verbunden wird, eingespannt gehalten, wobei das Implantat am apikalen Ende gegen einen Anschlag im Verpackungsbehälter oder Behälter gehalten wird. Die Verpackungen der Zahnimplantate oder kurz Behälter genannt, sind oft aufwendig und teuer. Auch kann es vereinzelt vorkommen, dass das apikale Ende des Zahnimplantats mit einem Kunststoff in Berührung kommt und bei einem Transport daran reibt, so dass sich Kunststoffpartikel am Zahnimplantat ablagern können.

EP2279708B1 offenbart einen Behälter mit einem Adapter, in den das Zahnimplantat eingespannt ist und mit dem das Zahnimplantat aus dem Behälter entnommen werden kann, um es dann aus dem Adapter herauszunehmen. Ein sicheres Einsetzen und Entnehmen eines Zahnimplantats in den und aus dem Behälter ist oft problematisch.

Allgemein soll das Zahnimplantat sowohl einfach in den Behälter einsetzbar sein, als auch daraus entnehmbar sein, ohne dass es dem Arzt Mühe macht oder das Implantat gar bei einem Entnehmen aus dem Behälter aus der Hand springt oder fällt. Die Entnahme des Zahnimplantats aus dem Behälter findet meist so statt, dass das Zahnimplantat am coronalen Ende, das primär für ein Ineinandergreifen mit dem Abutment ausgebildet ist, gehalten und aus dem Behälter oder einem Deckel davon herausgezogen wird.

EP0963738A1 offenbart dazu das Zahnimplantat mit einem apikalseitigen Implantatfortsatz auszubilden, der fest und einstückig mit dem Zahnimplantat ausgebildet ist und fest in einem Kopfteil des Behälters sitzt. Für eine Entnahme ist das Zahnimplantat mit einer Sollbruchstelle zwischen dem eigentlichen Zahnimplantat und dem Implantatfortsatz so ausgebildet, dass die Sollbruchstelle für die Entnahme des Zahnimplantats vom Deckel leicht genug von Hand, durch eine Dreh- und/oder Knickbewegung, abgetrennt werden kann. So

### BESTÄTIGUNGSKOPIE

kommt das apikale Ende des Zahnimplantats mit keinem anderen Stoff außer mit sich selbst und ggf. einer umgebenden Flüssigkeit in Berührung. Dabei ist der Kopfteil des Behälters mit dem Implantatfortsatz beispielsweise verklebt, um das Implantat vom Kopfteil abtrennen zu können. Ein Verkleben des Zahnimplantats mit dem Kopfteil wird jedoch als problematisch angesehen, da Klebstoff an das Zahnimplantat oder bei Flüssiglagerung in die Flüssigkeit gelangen könnte.

EP 1839617A1 beschreibt ein Schraubimplantat mit einem Endabschnitt, der, für bestimmte Einsatzfälle, über eine Sollbruchstelle von einem Fußabschnitt des Schraubimplantats trennbar ist, wobei der Endabschnitt eine rotationssymmetrische, profilierte Oberflächenstruktur, vorzugsweise ein Sägezahnprofil, aufweist. Der aus EP 1839617A1 bekannte Endabschnitt ist primär zum Verbleib mit dem Implantat zur Förderung des dauerhaften und festen Sitzes des Implantats im Kieferknochen vorgesehen.

Die Aufgabe der Erfindung, um die Nachteile aus dem Stand der Technik zu beseitigen, besteht daher in der Bereitstellung eines Zahnimplantats, das möglichst einfach in einem dafür vorgesehenen Behälter für einen Transport eingesetzt und auch wieder daraus entnommen werden kann, bei möglichst geringer Gefahr einer Verunreinigung des zu implantierenden Zahnimplantats.

Die vorstehende Aufgabe wird von einem Zahnimplantat gemäß den Merkmalen des unabhängigen Anspruchs 1 gelöst. Die vorstehende Aufgabe wird auch von einem Verfahren zum Transport eines apikal gehaltenen Zahnimplantats gemäß Anspruch 12 und durch eine Verwendung gemäß Anspruch 13 gelöst.

Weitere vorteilhafte Ausführungsformen der Erfindung sind in den abhängigen Ansprüchen angegeben.

Erfindungsgemäß wird dabei ein Zahnimplantat mit Implantatfortsatz, die entlang einer Längsachse ausgebildet sind, bereitgestellt, wobei:
a) das Zahnimplantat ein apikales Ende, ein coronales Ende und einen Abschnitt zur Aufnahme und Sicherung eines Abutments umfasst;
b) der Implantatfortsatz mit dem Implantat einstückig ausgebildet ist und sich von einer Stirnseite des apikalen Endes weg entlang der Längsachse erstreckt,
c) wobei der Implantatfortsatz entlang der Längsachse einen ersten Abschnitt mit einer annularen Einschnürung aufweist, die direkt mit der Stirnseite des apikalen Endes des Implantats verbunden und als eine Sollbruchstelle mit einem so kleinen Materialdurchmesser ausgebildet ist, dass bei einer Biegung öder einer Torsion des Implantats gegen den Implantatfortsatz, das Implantat vom Implantatfortsatz an der Einschnürung abbricht.
d) wobei erfindungsgemäß der Implantatfortsatz entlang der Längsachse im Anschluss an den ersten Abschnitt einen zweiten Abschnitt und einen Keilwellenabschnitt aufweist, wobei der zweite Abschnitt und der Keilwellenabschnitt vom Implantat weiter als der erste Abschnitt entfernt liegen,
e) der zweite Abschnitt darin senkrecht zur Längsachse eine äußere annulare Rille aufweist, die dazu ausgebildet ist, den Implantatfortsatz durch eine Klemmung der Rille in Richtung der Längsachse zu halten, und
f) wobei der Keilwellenabschnitt ausgebildet ist, den Implantatfortsatz um die Längsachse verdrehsicher zu halten.

Durch die Rille wird es vorteilhafterweise möglich, dass das Zahnimplantat durch den Implantatfortsatz in einen dazu passenden Kanal in einen Deckel eines für das Zahnimplantat bestimmten Behälters hineingesteckt und darin durch die Rille entlang der Längsachse gehalten werden kann. So kann der Behälter, der ein Transportbehälter für das Zahnimplantat ist und beispielsweise den Deckel und einen dazu passenden Bodenbehälter umfasst, einfach ausgebildet werden, wobei nur einmal das Zahnimplantat mit dem Deckel fest genug verbunden werden muss, um das Zahnimplantat später bei einer Entnahme aus dem Behälter und vom Deckel einfach abtrennen zu können. Dabei kann der Kanal beispielsweise so stabil ausgebildet werden, dass das Zahnimplantat durch ein Biegemoment vom Implantatfortsatz abgebrochen werden kann, wobei die Rille lediglich sicherzustellen braucht, dass ein darin eingreifender Federarm oder Halteelemente das Zahnimplantat beim Transport entlang der Längsrichtung genügend festhält, um nicht aus dem Kanal herauszufallen. Außerdem wird der Implantatfortsatz, nach dem Trennen vom Implantat, im Deckel gehalten bzw. daran gehindert aus dem Deckel zu fallen.

Bevorzugt und vorteilhafterweise kann die Rille mindestens eine Kante umfassen, die mit dem Haltelement oder dem Federarm des Deckels des Behälters eine Widerhakenfunktion bildet. Auf diese Weise kann das Zahnimplantat in Längsrichtung mit wenig Längskraft in den Deckel eingesetzt werden und sitzt dennoch dann in Längsrichtung stabil fest, ohne wieder oder nur mit ungleich höherer Kraft herausgezogen werden zu können. So kann das Zahnimplantat dann bei der Entnahme vom Deckel bzw. vom Implantatfortsatz im Deckel sicher abgebrochen werden.

Der im Implantatfortsatz ausgebildete Keilwellenabschnitt sorgt vorteilhafterweise dafür, dass der Implantatfortsatz verdrehsicher und stabil im Deckel gehalten wird, um das Implantat davon an der Sollbruchstelle mit einer Torsion zu beaufschlagen und dadurch auch abbrechen bzw. abdrehen zu können.

Bevorzugt und vorteilhafterweise liegt der Materialdurchmesser der Einschnürung zwischen 0,4 mm und 0,8 mm oder zwischen 0,8 mm und 1,2 mm oder weiter bevorzugt ist er kleiner als 1,0 mm oder kleiner als 0,7 mm oder kleiner als 0,6 mm.

Bevorzugt und vorteilhafterweise sind der Materialdurchmesser und ein Material der Einschnürung so ausgebildet und ausgewählt, dass die Einschnürung bei einer Torsion kleiner als 25 Ncm oder kleiner als 20 Ncm oder weiter bevorzugt kleiner als 10 Ncm oder noch weiter bevorzugt kleiner als 5 Ncm bricht.

Bevorzugt und vorteilhafterweise ist die Einschnürung so ausgebildet, dass der Materialdurchmesser des ersten Abschnitts entlang der Längsachse beginnend an der Stirnseite des apikalen Endes des Implantats kontinuierlich zunimmt.

Bevorzugt und vorteilhafterweise weist der Materialdurchmesser eines ersten Teilabschnitts des ersten Abschnitts des Implantatfortsatzes, der direkt an die Stirnseite des apikalen Endes angrenzt, eine Steigung in Bezug zur Längsachse von kleiner als 35° und bevorzugt 31° bis 25° auf.

Bevorzugt und vorteilhafterweise weist das Zahnimplantat zwischen dem apikalen Ende und dem coronalen Ende Gewindegänge zum Einschrauben des Zahnimplantats in einen Knochen auf.

Besonders vorteilhaft ist gemäß der vorliegenden Erfindung, dass der Implantatfortsatz ohne oder nur mit einer sehr geringfügigen Absplitterung des Implanatkörpers abtrennbar ist. Insbesondere kann erfindungsgemäß die Geometrie des apikalen Implantatendes praktisch nach der Abtrennung des Implantatfortsatzes unverändert bleiben, da sich jegliche Änderungen im Wesentlichen nur auf die kreisförmige Einschnürung beschränken.

Bevorzugte Ausführungsformen gemäß der vorliegenden Erfindung sind in nachfolgenden Zeichnungen und in einer detaillierten Beschreibung dargestellt, sie sollen aber die vorliegende Erfindung nicht ausschließlich darauf begrenzen.

Es zeigen
- Fig. 1: eine bevorzugte erste Ausbildungsform eines Zahnimplantats mit einem Implantatfortsatz oben in einer Seitenansicht und unten in einer geschnittenen Seitenansicht, wobei das Zahnimplantat an einem apikalen Ende einen Implantatfortsatz aufweist;
- Fig. 2a: in einer perspektivischen Ansicht das Zahnimplantat mit dem Implantatfortsatz aus Fig. 1;
- Fig. 2b: in einer persketivischen Ansicht eine bevorzugte zweite Ausbildungsform des Zahnimplantats mit einem anderen Implantatfortsatz;
- Fig. 2c: in einer Seitenansicht die bevorzugte zweite Ausbildungsform des Zahnimplantats mit einem anderen Implantatfortsatz;
- Fig. 3: drei perspektivische Ansichten eines Behälters aus einem Bodenbehälterteil mit einem Deckel, wobei oben links der Deckel mit dem Bodenbehälterteil verbunden dargestellt ist, oben rechts nur das Bodenbehälterteil offen dargestellt ist, und unten links nur der Deckel mit dem darin eingesetzten Zahnimplantat dargestellt ist;
- Fig. 4: in einer perspektivischen Explosionsansicht den Deckel aus Fig. 3 mit einem Zwischenverbindungselement, einem Halter, einem Clip-Element als seinen Komponenten und dem Zahnimplantat;
- Fig. 5: in einer geschnittenen Seitenansicht den Deckel mit dem darin eingesetzten Zahnimplantat;
- Fig. 6: den Halter des Deckels für das Zahnimplantat, links im Bild in einer perspektivischen Ansicht und rechts im Bild in einer geschnittenen Seitenansicht;
- Fig. 7: das Clip-Element des Deckels für das Zahnimplantat, links im Bild in einer Draufsicht und rechts im Bild in einer geschnittenen Seitenansicht;
- Fig. 8: in einer perspektivischen Ansicht den Deckel mit seinen Komponenten von innen.

### Detaillierte Beschreibung von Ausführungsbeispielen

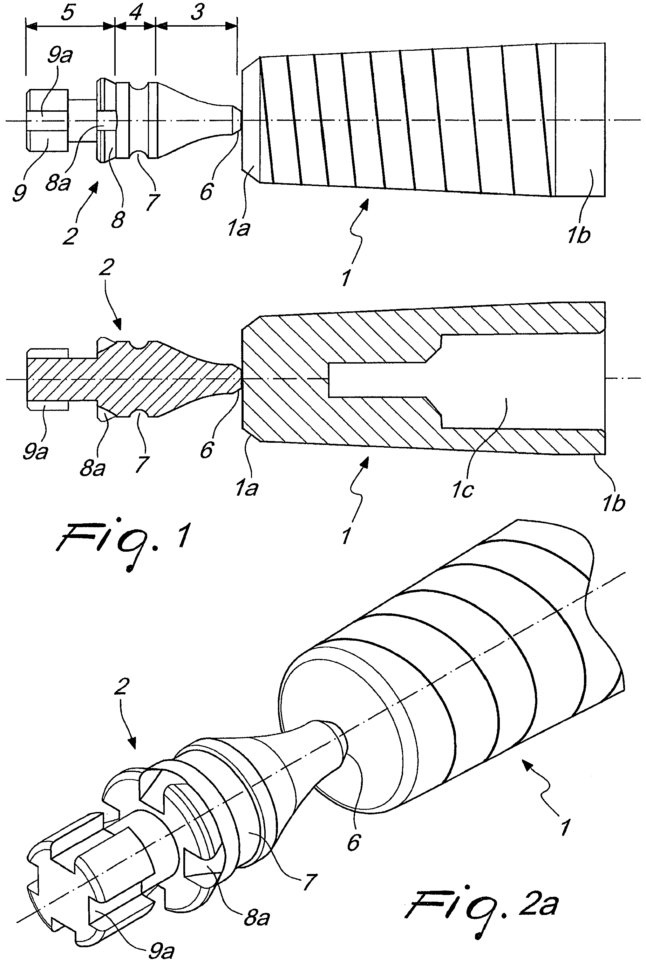

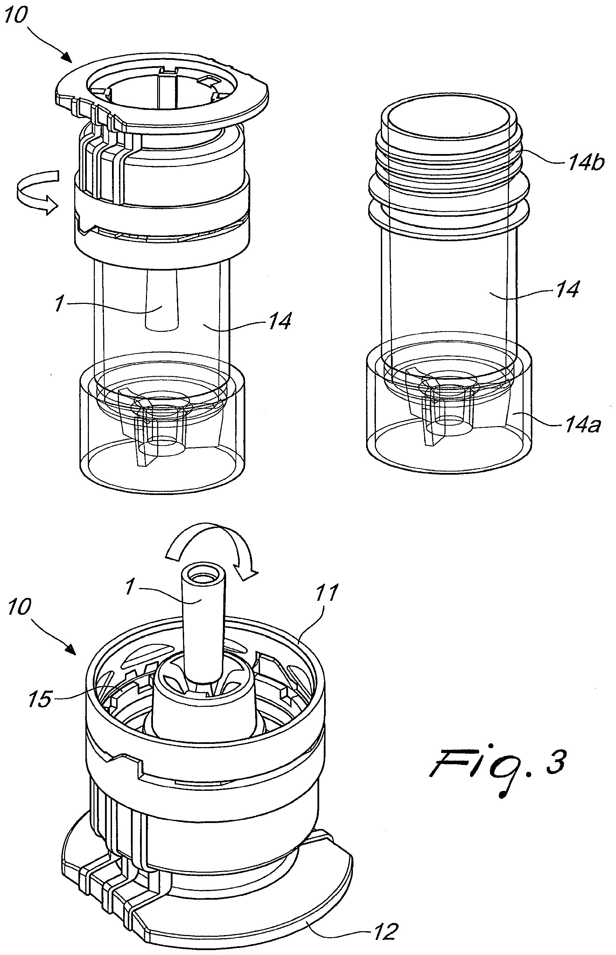

In Fig. 1 und 2a ist ein erstes bevorzugtes Ausführungsbeispiel eines Zahnimplantats 1 mit einem Implantatfortsatz 2 dargestellt, das entlang einer Längsachse ausgebildet ist. In Fig. 3 - 8 ist ein entsprechend ausgebildeter Behälter zum Halten und Transportieren des Zahnimplantats dargestellt.

Allgemein ist das Zahnimplantat 1 mit dem Implantatfortsatz 2 entlang einer Längsachse und wie folgt ausgebildet, wobei:
a) das Zahnimplantat 1 ein apikales Ende 1a, ein coronales Ende 1b und einen Abschnitt 1c zur Aufnahme und Sicherung eines Abutments umfasst; dabei kann eine Verbindung des Zahnimplantats mit dem Abutment sowohl extern als auch intern erfolgen; auch bildet der Abschnitt 1c eine Adapterverbindung zu einem geeigneten Werkzeug.
b) der Implantatfortsatz 2 mit dem Implantat 1 einstückig ausgebildet ist und sich von einer Stirnseite des apikalen Endes 1a weg entlang der Längsachse erstreckt,
c) der Implantatfortsatz 2 entlang der Längsachse einen ersten Abschnitt 3 mit einer annularen Einschnürung 6 aufweist, die direkt mit der Stirnseite des apikalen Endes 1a des Implantats 1 verbunden und als eine Sollbruchstelle mit einem so kleinen Materialdurchmesser ausgebildet ist, dass bei einer Biegung oder einer Torsion des Implantats 1 gegen den Implantatfortsatz 2, das Implantat 1 vom Implantatfortsatz 2 an der Einschnürung 6 abbricht,
d) wobei erfindungsgemäß der Implantatfortsatz 2 entlang der Längsachse im Anschluss an den ersten Abschnitt 3, einen zweiten Abschnitt 4 und einen Keilwellenabschnitt 5 aufweist, wobei der zweite Abschnitt 4 und der Keilwellenabschnitt 5 vom Implantat 1 weiter als der erste Abschnitt 3 entfernt liegt und der zweite Abschnitt 4 darin senkrecht zur Längsachse eine äußere annulare Rille 7 aufweist, die dazu ausgebildet ist, den Implantatfortsatz 2 durch eine Klemmung der Rille 7 in Richtung der Längsachse zu halten. Der Keilwellenabschnitt 5 ist dabei ausgebildet, den Implantatfortsatz 2 um die Längsachse verdrehsicher zu halten.

Der Implantatfortsatz 2 ist so ausgebildet, dass er in einem Deckel 10 eines Behälters, der ein Transortbehälter ist, eingesetzt werden kann, um das Zahnimplantat 1 also durch Halten des Implantatfortsatz 2 darin fest zu halten und transportieren zu können. Der Behälter oder Transportbehälter umfasst dabei bevorzugt den Deckel 10 und ein Bodenbehälterteil 14, wie beispielsweise in Fig. 3 dargestellt, die dicht miteinander verschließbar sind und zu einer Entnahme des Zahnimplantats 1 geöffnet werden können. Im Deckel 10 ist bevorzugt ein Kanal ausgebildet, in den der Implantatfortsatz 2 hineinsteckbar und darin arretierbar ist.

Bevorzugt ist die Rille 7 mit mindestens einer Kante so ausgebildet, dass in der Rille beispielsweise Federarme 31 oder Haltelemente des Deckels 10, die elastisch im Deckel sein müssen, eingreifen können, wobei die Federarme 31 oder Haltelemente mit der Kante oder Rille eine Widerhakenfunktion bilden. Die Kante ist also bevorzugt am apikalen Ende der Rille gebildet, gegen die die Federarme 31 oder Haltelemente anstoßen bei einem Zurückziehen des Implantatfortsatz 2 vom Deckel 10 weg den Implantatfortsatz 2 darin zurückhalten. Bevorzugt ist die Kante zugleich auch die äußere Kante einer senkrecht zur Längsachse hin sich ersteckenden annularen Fläche, um die Widerhakenfunktion mit den darin eingreifenden Federarmen 31 oder Haltelementen zu bilden. So kann das Zahnimplantat 1 sicher in den Deckel 10 eingesteckt und gehalten werden und bei der Entnahme vom Deckel 10 mit dem Implantatfortsatz 2 davon abgebrochen werden.

Bevorzugt sind in einem coronalen Abschnitt des Keilwellenabschnitts 5, wie in Fig. 1 und 2a dargestellt, um die Längsachse herum kreissegmentartige erste Keile 8 ausgebildet, die durch dazwischenliegende erste Naben 8a gebildet werden. Bevorzugt sind auch an einem apikalen äußeren Abschnitt des Keilwellenabschnitts 5, wie dargestellt, um die Längsachse herum kreissegmentartige zweite Keile 9 ausgebildet, die durch dazwischenliegende zweite Naben 9a gebildet werden. Bevorzugt wird entlang der Längsachse zwischen den ersten Keilen 8 und den zweiten Keilen 9 eine zweite Rille gebildet, die auch dazu dienen kann, darin andere Federarme oder ähnliche Halteelemente eines Deckels oder eines Teils davon einschnappen lassen zu können. Die ersten Keile 8 und die zweiten Keile 9 sind so ausgebildet, dass sie einem größeren Torsionsdrehmoment standhalten, als es nötig ist, das Zahnimplantat 1 über die Sollbruchstelle 6 vom Implantatfortsatz abzutrennen, abzubrechen oder abzudrehen.

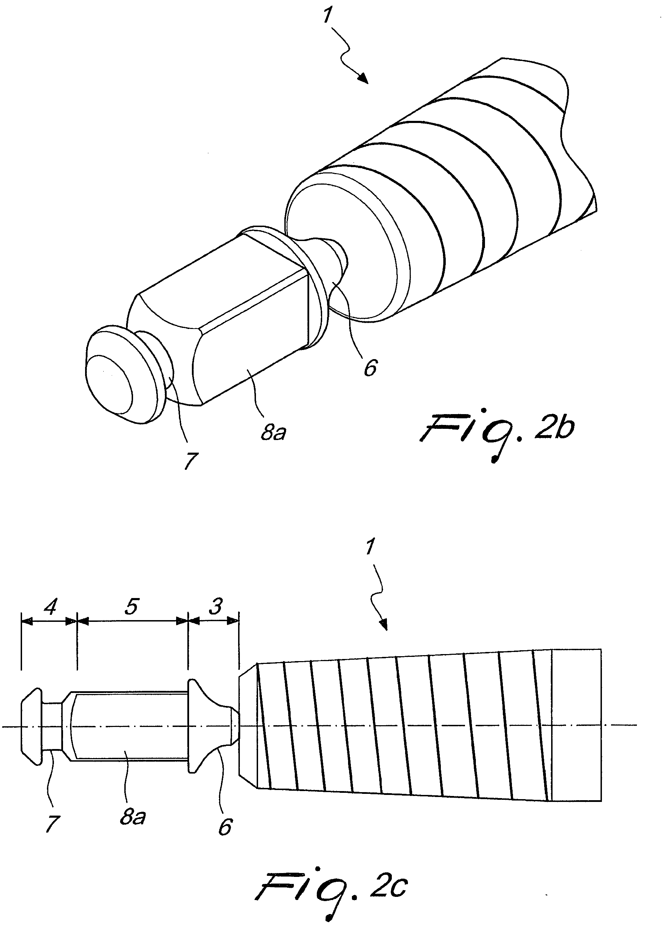

In Fig. 2b und 2c ist ein zweites bevorzugtes Ausführungsbeispiel des Zahnimplantats 1 mit einem anderen Implantatfortsatz 2 dargestellt, wobei der Keilwellenabschnitt darin dadurch gebildet ist, dass er vierkantstabförmig ausgebildet ist und somit in Verbindung mit dem Halter 20, als einem entsprechenden Gegenstück, eine Verdrehsicherung bildet. Zur Klarheit könnte auch anstelle des Begriffs Keilwellenabschnitt der Begriff Verdrehsicherungsabschnitt als ein Oberbegriff verwendet werden, wobei der Verdrehsicherunsabschnitt das Merkmal aufweist, lediglich nicht kreis- oder rotationssymmetrisch zu sein. Bevorzugt ist der Keilwellenabschnitt 5 oder Verdrehsicherungsabschnitt mit Einkerbungen oder Ausstülpungen oder mit Ebenenabschnitten versehen. In anderen Worten weist der Keilwellenabschnitt (5) entlang der Längsachse und um die Längsachse herum mindestens einen lateralen Ebenenabschnitt oder mindestens einen Keilwellenabschnitt als Nut oder als Ausstülpung auf, um mit einem entsprechenden Gegenstück die Verdrehsicherung zu erzeugen. Das Gegenstück ist dabei zur Klarheit der Halter 20 des Deckels 10. Mögliche Querschnittsformen des Keilwellenabschnitts 5 oder Verdrehsicherungsabschnitts könnten eine quadratische oder rechteckige, eine sternförmige oder eine Torx-artige Form sein.

Bevorzugt liegt der zweite Abschnitt 4 entlang der Längsachse zwischen dem ersten Abschnitt 3 und dem Keilwellenabschnitt 5. Alternativ liegt der Keilwellenabschnitt 5 entlang der Längsachse zwischen dem ersten Abschnitt 3 und dem zweiten Abschnitt 4.

Bevorzugt liegt der Materialdurchmesser der Einschnürung 6 in einem Bereich insbesondere in der Ausführungsform der Fig. 2a zwischen 0,4 mm und 0,8 mm oder insbesondere in der Ausführungsform der Fig. 2b bzw. 2c zwischen 0,8 mm und 1,2 mm oder weiter bevorzugt ist er kleiner als 1,0 mm (insbesondere in der Ausführungsform der Fig. 2b bzw. 2c) oder kleiner als 0,7 mm oder kleiner als 0,6 mm (insbesondere in der Ausführungsform der Fig. 2a)

Bevorzugt ist der Materialdurchmesser der Einschnürung 6 so ausgebildet, dass die Einschnürung 6 bei einer Torsion von kleiner als 25 Ncm oder kleiner als 20 Ncm oder weiter bevorzugt kleiner als 10 Ncm oder noch weiter bevorzugt kleiner als 5 Ncm bricht.

Bevorzugt ist das Zahnimplantat (1) aus einem biokompatiblen Material wie beispielsweise Titan, einer Titanlegierung oder aus Keramik wie beispielsweise Zirkonoxidkeramik gefertigt.

Bevorzugt ist die Einschnürung 6 so ausgebildet, dass der Materialdurchmesser des ersten Abschnitts 3 entlang der Längsachse beginnend an der Stirnseite des apikalen Endes 1a des Implantats 1 kontinuierlich zunimmt.

Bevorzugt weist der Materialdurchmesser eines ersten Teilabschnitts des ersten Abschnitts 3 des Implantatfortsatzes 2, der direkt an die Stirnseite des apikalen Endes 1a angrenzt, eine Steigung in Bezug zur Längsachse von kleiner als 35° und bevorzugt 31° bis 25° auf.

Bevorzugt weist das Zahnimplantat 1 zwischen dem apikalen Ende 1a und dem coronalen Ende 1b Gewindegänge zum Einschrauben des Zahnimplantats 1 in einen Knochen auf.

Fig. 3-8 zeigen ein Ausführungsbeispiel des Behälters und bevorzugter Teile davon, die zum Halten und Transportieren des Zahnimplantat 1 geeignet sind. Dabei soll der Behälter möglichst so ausgebildet sein, dass sich das Zahnimplantat 1 mit dessen Implantatfortsatz 2 möglichst einfach und sicher, ohne herunterzufallen oder abzuknicken, darin einsetzen, halten und sicher transportieren lässt. Das Zahnimplantat 1 wird dabei in den Deckel 10 eingesetzt und darin arretiert. Auch soll der Behälter leicht geöffnet und das Zahnimplantat 1 wieder daraus entnommen werden können.

Der Behälter kann dabei so ausgebildet sein, Folgendes zu umfassen:
a) den Deckel 10, der entlang der Längsachse mit einem ersten Endabschnitt 11, der nach außen hin in Richtung der Längsachse offen ist, und einem zweiten Endabschnitt 12, der nach außen hin geschlossen ist, ausgebildet ist. Der Deckel 10 umschließt dabei einen zum ersten Endabschnitt 11 hin offenen Innenraum 15, in dem entlang der Längsachse ein Halter 20 angeordnet ist, der den außen offenen Kanal entlang der Längsachse aufweist, wobei der Kanal ausgebildet ist, dass er den Implantatfortsatz 2 zumindest teilweise aufnimmt und somit das Zahnimplantat 1 während eines Transports hält;
b) den Bodenbehälter 14, der entlang der Längsachse rohrförmig mit einem äußeren dritten Endabschnitt 14a und einem gegenüberliegenden vierten Endabschnitt 14b ausgebildet ist, wobei der dritte Endabschnitt 14a nach außen dicht verschlossen ist;
c) wobei der vierte Endabschnitt 14b des Bodenbehälters 14 und der erste Endabschnitt 11 des Deckels 10 miteinander verbindbar und manuell lösbar ausgebildet sind, um dazwischen einen im wesentlichen gas- und flüssigkeitsdichten Raum zu bilden, in dem sich das Zahnimplantat 1 befindet.
d) wobei im Deckel 10 zur Längsachse hin die mindestens drei Federarme 31 so ausgebildet und angeordnet sind, dass sie jeweils an einem äußeren ersten Ende 31a entlang eines ringförmigen Bereichs um die Längsachse mit dem Deckel 10 verbunden sind und mit einem jeweiligen gegenüberliegenden zweiten Ende 31b radial zur Längsachse hin gleich beabstandet und federnd sind;
e) wobei die zweiten Enden 31b zur Längsachse hin jeweils eine Noppe 32 aufweisen, die ausgebildet ist, in eine Rille 7, die am Implantatfortsatz 2 annular ausgebildet ist, einzugreifen, wenn der Implantatfortsatz 2 in seiner Endposition ist; und
f) wobei die Federarme 31 geometrisch und so flexibel ausgebildet sind, dass die Noppen 32 bei einem Einsetzen des Implantatfortsatzes 2 von der Längsachse weg gedrückt werden und in der Endposition mit einer Spannkraft senkrecht zur Längsachse in die Rille 7 drücken.

Bevorzugt ist der Halter 20 um die Längsachse rotationsfest mit dem Deckel 10 verbunden, und der Kanal weist entlang der Längsachse zumindest abschnittsweise einen Keilnabenabschnitt oder zweiten Verdrehsicherungsabschnitt auf. Der Keilnabenabschnitt oder zweite Verdrehsicherungsabschnitt, wie er auch genannt werden könnte, ist dabei so ausgebildet, dass er mit dem Keilwellenabschnitt oder dem Verdrehsicherungsabschnitt des Implantatfortsatzes 2 in der Endposition die rotationsfeste, verdrehsichere Verbindung zu bilden. Zur Klarheit gilt in diesem Dokument allgemein dass die Begriffe "Keilwellenabschnitt" und "zweiter Verdrehsicherungsabschnitt" Synonyme füreinander sind.

Bevorzugt weist der Keilnabenabschnitt eine größere Torsionsstabilität, um den Keilwellenabschnitt des Implantatfortsatzes 2 zu halten, auf, als es nötig ist, um das Implantat 1 vom Implantatfortsatz 2 um die Längsachse drehend abzubrechen. Dabei ist die Torsionsstabilität zwischen dem Keilnabenabschnitt des Halters und dem Keilwellenabschnitt des Implantatfortsatzes 2 derart ausgewählt, dass ein sicherer Halt des Implantats während seines Transports und der Lagerung gewährleistet werden kann. In bekannter Weise ist die geringere Drehkraft, die erforderlich ist, um das Implantat vom Implantatfortsatz abzutrennen, derart ausgewählt, dass die Sicherheit der Verbindung des Implantats mit dem Implantatfortsatz während Transport und Lagerung gewährleistet ist und gleichzeitig beim Abtrennen des Implantats keine Beschädigungen des Implantats bzw. seines Adapters eintreten.

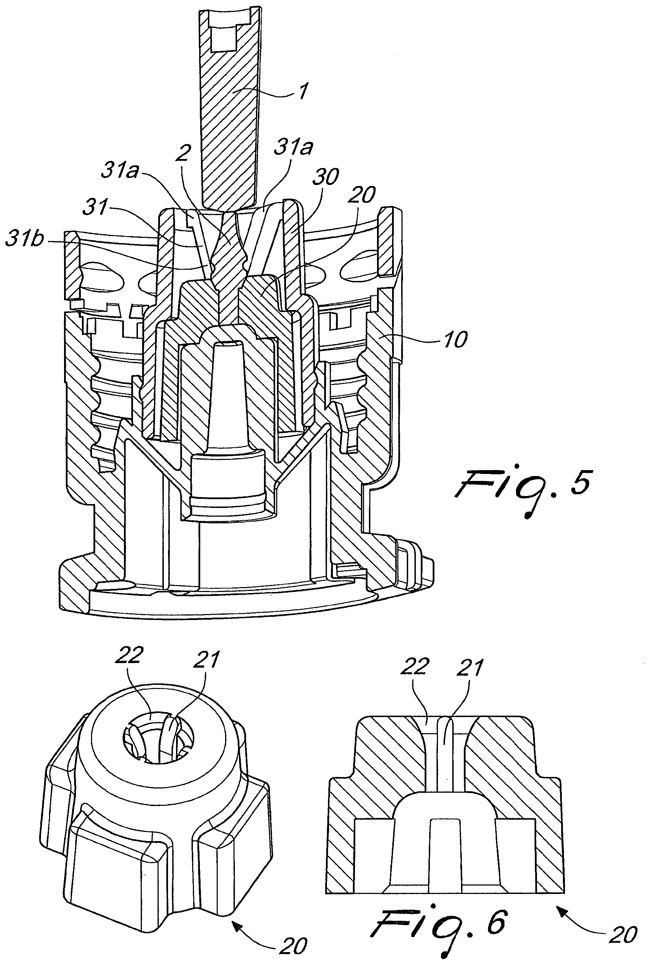

Bevorzugt weist der Halter 20, wie in Fig. 6 exemplarisch dargestellt, einen Keilnabenabschnitt auf, der zu dem Keilwellenabschnitt 5 des Implantatfortsatzes 2 komplementär ist, wobei dritte Naben 22 des Halters 20 zumindest zu den ersten Keilen 8 des Implantatfortsatzes 2 und dritte Keile 21 des Halters 20 zumindest zu den ersten Naben 8a des Implantatfortsatzes 2 passen, wobei bevorzugt jedoch dritte Naben 22 des Halters 20 zu den ersten Keilen 8 und zu den zweiten Keilen 9 des Implantatfortsatzes 2 und dritte Keile 21 des Halters 20 zu den ersten Naben 8a und den zweiten Naben 9a des Implantatfortsatzes 2 passen, um eine rotationsfeste Verbindung herzustellen. Wie oben erwähnt, ist der Keilnabenabschnitt oder der zweite Verdrehsicherungsabschnitt komplementär zu dem Keilwellenabschnitt 5 oder Verdrehsicherungsabschnitt des Implantatfortsatzes 2 ausgebildet.

Bevorzugt ist die Torsionsstabilität zwischen dem Keilnabenabschnitt des Halters 20 und dem Keilwellenabschnitt des Implantatfortsatzes 2 größer als 25 Ncm oder als 20 Ncm, bevorzugt größer als 10 Ncm und besonders bevorzugt größer als 5 Ncm, um ein sicheres Abbrechen des Zahnimplantat 1 vom Implantatfortsatz 2 und von Deckel 10 zu gewährleisten.

Bevorzugt ist der Halter 20 einstückig mit dem Deckel 10 verbunden. Alternativ ist der Halter 20 zweistückig oder über mindestens ein Zwischenverbindungselement 13 mit dem Deckel 10 verbunden. Bevorzugt ist der Halter 20 als eine vom Deckel 10 separate Buchse ausgebildet, die zum Deckel 10 hin eine Steckverbindung aufweist, die mit dem Deckel 10 entlang der Längsachse ineinander schiebbar ist und dabei eine rotationsfeste Verbindung bildet. Vorzugsweise weist die Steckverbindung eine Torsionsstabilität auf, die höher ist als die Torsionsstabilität der Verbindung zwischen dem Keilnabenabschnitt des Halters 20 und dem Keilwellenabschnitt des Implantatfortsatzes 2.

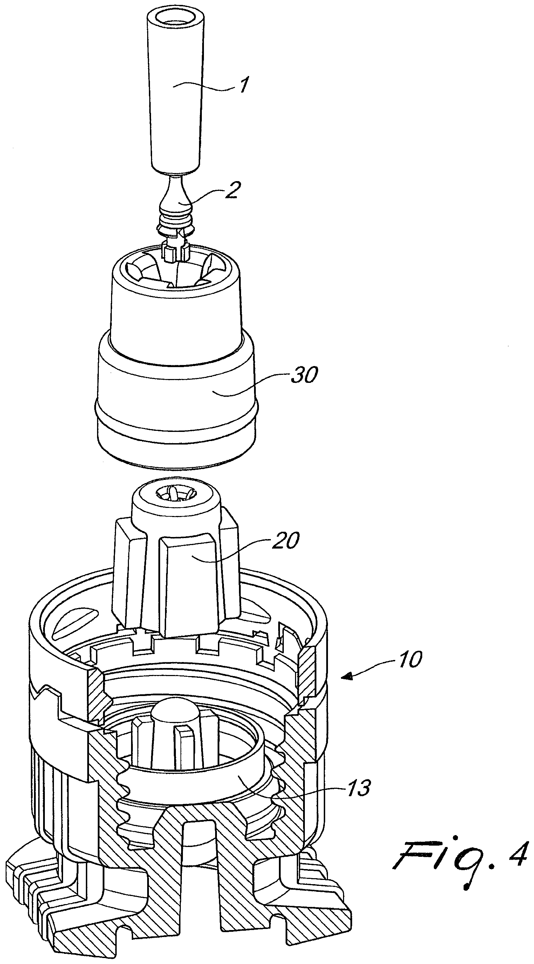

Bevorzugt umfasst die Steckverbindung zwischen dem Halter 20 und dem Deckel 10 das separate Zwischenverbindungselement 13, das entlang der Längsachse so ausgebildet ist, bei einem Ineinanderstecken entlang der Längsachse an einem Endabschnitt eine rotationsfeste Verbindung zum Halter 20 und an einem gegenüberliegenden Endabschnitt eine rotationsfeste Verbindung zum Deckel 10 gebildet wird. Das Zwischenverbindungselement 13 kann dabei eine Adapterfunktion haben, um beispielsweise verschiedene zu einem jeweiligen Zahnimplantat 1 passenden Halter 20 mit dem Deckel 10 verbinden zu können. In Fig. 4 ist solch ein Zwischenverbindungselement 13 gezeigt, das zwischen dem Deckel 10 und dem Halter 20 angeordnet ist und diese verbindet. Die Verbindung über das Zwischenverbindungselement 13 ist dabei bevorzugt eine rotationsfeste Verbindung und/oder bevorzugt eine zugfeste Verbindung. Bevorzugt kann das Zwischenverbindungselement 13 auch elastisch ausgebildet sein, um Stöße in Längsrichtung entlang der Längsachse zu dämpfen.

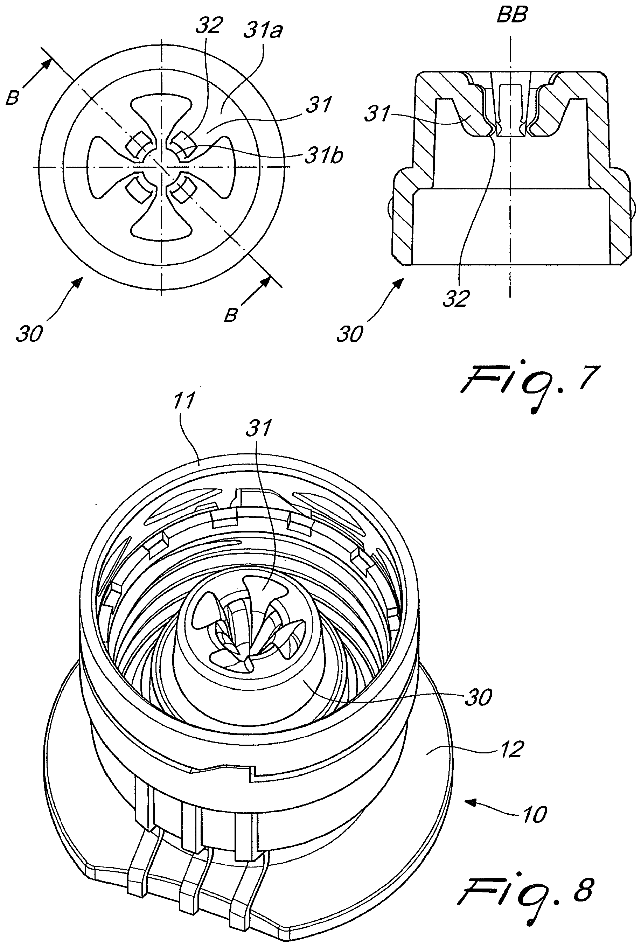

Bevorzugt sind die mindestens drei Federarme 31 einstückig als ein Clip-Element 30 ausgebildet, das um die Längsachse herum ausgebildet ist, wie beispielsweise in Fig. 7 dargestellt. Besonders bevorzugt sind vier Federarme 31 einstückig als ein Clip-Element 30 ausgebildet, das um die Längsachse herum ausgebildet ist, wie beispielsweise in Fig. 7 dargestellt. Das Clip-Element 30 ist mit dem Deckel in Richtung der Längsachse verbindbar, um in einem aufgesteckten, aufgeschobenen, eingerasteten und/oder aufgedrehten Zustand zugfest mit dem Deckel 10 verbunden zu sein. In anderen Worten ist das Clip-Element 30 bevorzugt ausgebildet, eine direkte Verbindung mit dem Deckel 10 zu bilden, wobei das Clip-Element 30 dadurch den Halter 20 im Deckel entlang der Längsachse fixiert.

Bevorzugt sind der Deckel 10, der Halter 20 und das Clip-Element 30 ausgebildet, dass im Innenraum 15 des Deckels 10 zunächst der Halter 20 in den Deckel 10 und dann das Clip-Element 30 auf den Halter 20 eingesetzt und miteinander verbunden sind. Bevorzugt sind das Clip-Element 30 und der Deckel 10 ausgebildet, den Halter 20 dazwischen in der Längsrichtung auf dem Deckel 10 zu halten.

Bevorzugt sind der Deckel 10, das Zwischenverbindungselement 13, der Halter 20 und das Clip-Element 30 ausgebildet, dass im Innenraum 15 des Deckels 10 zunächst das Zwischenverbindungselement 13 in den Deckel 10, dann der Halter 20 auf das Zwischenverbindungselement 13 und dann das Clip-Element 30 auf den Halter 20 eingesetzt und miteinander verbunden sind.

Bevorzugt ist das Clip-Element 30 aus einem flexibleren Material als der Halter 20 und/oder mit einer flexiblen Geometrie ausgebildet, beispielsweise durch Schlitze oder federarmige Stege, wie exemplarisch in Fig. 7 dargestellt.

Bevorzugt weist der zweite Endabschnitt 12 außen eine unrunde Griffoberfläche auf, um den Deckel 10 daran manuell so rutschfest halten und drehen zu können, um ihn vom Bodenbehälter 14 sicher lösen zu können.

Bevorzugt ist der Kanal im Halter 20 zum Halten des Implantatfortsatzes 2 zumindest so stabil ausgebildet, dass er zumindest einem Biegemoment durch den Implantatfortsatz 2 in der Endposition standhält, das bei einem Abtrennen des Implantats 1 vom Implantatfortsatz 2 durch ein biegendes Abbrechen auftritt. Erfindungsgemäß umfasst der Begriff "abtrennbar" oder "Abtrennen" jede Art von Abtrennungen, wie beispielsweise durch abbrechen oder abdrehen.

Zur Klarheit werden unter den Merkmalen "oben" und "unten" relative Ortsangaben in senkrechter Richtung verstanden, so wie in den Figuren dargestellt. Unter apikal wird eine Position verstanden, die am Knochen sitzt und weiter vom Abutment oder dem Zahlaufsatz entfernt ist, als ein coronales Ende. Manchmal wird unter apikal auch distal und unter coronal proximal zum Arzt hin verstanden, bei einem eingesetzten Zahnimplantat 1.

Weitere mögliche Ausbildungsformen sind in den folgenden Ansprüchen beschrieben. Insbesondere können auch die verschiedenen Merkmale der oben beschriebenen Ausführungsformen miteinander kombiniert werden, soweit sie sich nicht technisch ausschließen.

Die im Text zuvor und in den Ansprüchen genannten Bezugszeichen dienen nur der besseren Verständlichkeit und beschränken die Ansprüche in keiner Weise auf die in den Figuren dargestellten Formen.

### Bezugszeichenliste

- 1: Zahnimplantat
- 1a: apikales Ende
- 1b: coronales Ende
- 1c: Adapterverbindung
- 2: Implantatfortsatz (Appendix)
- 3: erster Bereich
- 4: zweiter Bereich
- 5: Keilwellenabschnitt
- 6: Einschnürung
- 7: Rille
- 8: erste Keile (bevorzugt kreissegmentartig)
- 8a: erste Naben
- 9: zweite Keile
- 9a: zweite Naben
- 10: Deckel
- 11: erster Endabschnitt
- 12: zweiter Endabschnitt
- 13: Zwischenverbindungselement
- 14: Bodenbehälter
- 14a: dritter Endabschnitt
- 14b: vierter Endabschnitt
- 15: Innenraum
- 20: Halter für das Implantat
- 21: dritte Keile
- 22: dritte Naben
- 30: Clip-Element
- 31: Federarm
- 31a: äußeres erstes Ende
- 31b: äußeres zweites Ende
- 32: Noppe (oder nasenartige Ausbuchtung)

## Patentansprüche

1. Zahnimplantat (1) mit Implantatfortsatz (2), die entlang einer Längsachse ausgebildet sind, wobei:
- das Zahnimplantat (1) ein apikales Ende (1a), ein coronales Ende (1b) und einen Abschnitt (1c) zur Aufnahme und Sicherung eines Abutments umfasst;
- der Implantatfortsatz (2) mit dem Implantat (1) einstückig ausgebildet ist und sich von einer Stirnseite des apikalen Endes (1a) weg entlang der Längsachse erstreckt,
- wobei der Implantatfortsatz (2) entlang der Längsachse einen ersten Abschnitt (3) mit einer annularen Einschnürung (6) aufweist, die direkt mit der Stirnseite des apikalen Endes (1a) des Implantats (1) verbunden und als eine Sollbruchstelle mit einem so kleinen Materialdurchmesser ausgebildet ist, dass bei einer Biegung oder einer Torsion des Implantats (1) gegen den Implantatfortsatz (2), das Implantat (1) vom Implantatfortsatz (2) an der Einschnürung (6) abbricht,
**dadurch gekennzeichnet, dass**
- der Implantatfortsatz (2) entlang der Längsachse im Anschluss an den ersten Abschnitt (3), einen zweiten Abschnitt (4) und einen Keilwellenabschnitt (5) aufweist, wobei der zweite Abschnitt (4) und der Keilwellenabschnitt (5) vom Implantat (1) weiter als der erste Abschnitt (3) entfernt liegen,
- wobei der zweite Abschnitt (4) darin senkrecht zur Längsachse eine äußere annulare Rille (7) aufweist, die dazu ausgebildet ist, den Implantatfortsatz (2) durch eine Klemmung der Rille (7) in Richtung der Längsachse zu halten, und
- wobei der Keilwellenabschnitt (5) ausgebildet ist, den Implantatfortsatz (2) um die Längsachse verdrehsicher zu halten.

2. Zahnimplantat (1) mit Implantatfortsatz (2) gemäß Anspruch 1, wobei der zweite Abschnitt (4) entlang der Längsachse zwischen dem ersten Abschnitt (3) und dem Keilwellenabschnitt (5) liegt.

3. Zahnimplantat (1) mit Implantatfortsatz (2) gemäß Anspruch 1, wobei der Keilwellenabschnitt (5) entlang der Längsachse zwischen dem ersten Abschnitt (3) und dem zweiten Abschnitt (4) liegt.

4. Zahnimplantat (1) mit Implantatfortsatz (2) gemäß Anspruch 1 oder 2, wobei der Materialdurchmesser der Einschnürung (6) zwischen 0,4 mm und 0,8 mm oder bevorzugt kleiner als 0,7 mm oder noch weiter bevorzugt 0,6 mm ist.

5. Zahnimplantat (1) mit Implantatfortsatz (2) gemäß Anspruch 1 oder 2, wobei der Materialdurchmesser der Einschnürung (6) zwischen 0,8 mm und 1,2 mm oder bevorzugt kleiner als 1,0 mm ist.

6. Zahnimplantat (1) mit Implantatfortsatz (2) gemäß einem oder mehreren der vorstehenden Ansprüche, wobei der Materialdurchmesser der Einschnürung (6) so ausgebildet ist, dass die Einschnürung (6) bei einer Torsion kleiner als 25 Ncm oder kleiner als 20 Ncm oder kleiner als 10 Ncm oder kleiner als 5 Ncm bricht.

7. Zahnimplantat (1) mit Implantatfortsatz (2) gemäß einem oder mehreren der vorstehenden Ansprüche, wobei die Einschnürung (6) so ausgebildet ist, dass der Materialdurchmesser des ersten Abschnitts (3) entlang der Längsachse beginnend an der Stirnseite des apikalen Endes (1a) des Implantats (1) kontinuierlich zunimmt.

8. Zahnimplantat (1) mit Implantatfortsatz (2) gemäß Anspruch 7, wobei der Materialdurchmesser eines ersten Teilabschnitts des ersten Abschnitts (3) des Implantatfortsatzes (2), der direkt an die Stirnseite des apikalen Endes (1a) angrenzt, eine Steigung in Bezug zur Längsachse von kleiner als 35° und bevorzugt 31° bis 25° aufweist.

9. Zahnimplantat (1) mit Implantatfortsatz (2) gemäß einem oder mehreren der vorstehenden Ansprüche, wobei das Zahnimplantat (1) zwischen dem apikalen Ende (1a) und dem coronalen Ende (1b) Gewindegänge zum Einschrauben des Zahnimplantats (1) in einen Knochen aufweist.

10. Zahnimplantat (1) mit Implantatfortsatz (2) gemäß einem oder mehreren der vorstehenden Ansprüche, wobei die Rille (7) nach außen mit mindestens einer Kante so ausgebildet ist, dass in der Rille beispielsweise elastische Federarme (31) oder ähnliche Haltelemente eines Deckels (10), der einen Kanal aufweist, in den der Implantatfortsatz (2) einschiebbar ist, eingreifen können, um den Implantatfortsatz (2) im Kanal festzuklemmen, wobei die Kante zugleich eine senkrecht zur Längsachse hin sich ersteckende annulare Fläche begrenzt, um eine Widerhakenfunktion mit den darin eingreifenden Federarmen (31) oder ähnlichen Haltelementen zu bilden.

11. Zahnimplantat (1) mit Implantatfortsatz (2) gemäß einem oder mehreren der vorstehenden Ansprüche, wobei der Keilwellenabschnitt (5) entlang der Längsachse und um die Längsachse herum mindestens einen lateralen Ebenenabschnitt oder mindestens einen Keilwellenabschnitt als Nut oder als Ausstülpung aufweist, um mit einem entsprechenden Gegenstück die Verdrehsicherung zu erzeugen.

12. Verfahren zum Transport eines apikal gehaltenen Zahnimplantats, **dadurch gekennzeichnet, dass** das Zahnimplantat ein Zahnimplantat (1) mit Implantatfortsatz (2) gemäß einem oder mehreren der voranstehenden Ansprüche 1 bis 11 ist, und das Zahnimplantat zum Transport apikal am Implantatfortsatz gehalten wird.

13. Verwendung eines Zahnimplantats (1) mit Implantatfortsatz (2) gemäß einem oder mehreren der voranstehenden Ansprüche 1 bis 11 zum apikalen Halten des Implantats in einem Transportbehältnis, insbesondere eines Deckels des Transportbehältnisses.

14. Verwendung gemäß Anspruch 13, worin das Halten des Implantats im Transportbehältnis bzw. im Deckel des Transportbehältnisses ausschließlich apikal erfolgt.

## Claims

1. Dental implant (1) with implant extension (2) which are arranged along a longitudinal axis, where:
- the dental implant (1) comprises an apical end (1a), a coronal end (1b) and a portion (1c) for receiving and securing an abutment.
- the implant extension (2) is formed integral with the implant (1) and extends away from an end face of the apical end (1a) along the longitudinal axis;
- the implant extension (2) having a first portion (3) with an annular constriction (6) along the longitudinal axis, which constriction is directly connected to the end face of the apical end (1a) of the implant (1) and formed as a predetermined breaking point with a material diameter which is small enough so that in case of flexion or torsion of the implant (1) with respect to the implant extension (2), the implant (1) breaks off the implant extension (2) at the constriction (6);
**characterized in that**
- the implant extension (2) has along its longitudinal axis, in proximity to the first portion (3), a second portion (4) and a spline shaft portion (5), the second portion (4) and the spline shaft portion (5) being farther away from the implant (1) than the first portion (3);
- the second portion (4) having therein vertically to the longitudinal axis an exterior annular groove (7) which is adapted to retain the implant extension (2) in the direction of the longitudinal axis by a clamping of the groove (7), and
- the spline shaft portion (5) being adapted to secure the implant extension (2) against rotation about the longitudinal axis.

2. Dental implant (1) with implant extension (2) according to Claim 1, the second portion (4) being positioned between the first portion (3) and the spline shaft portion (5) along the longitudinal axis.

3. Dental implant (1) with implant extension (2) according to Claim 1, the spline shaft portion (5) being positioned between the first portion (3) and the second portion (4) along the longitudinal axis.

4. Dental implant (1) with implant extension (2) according to Claim 1 or 2, the material diameter of the constriction (6) being between 0.4 mm and 0.8 mm or preferably smaller than 0.7 mm or even more preferably 0.6 mm.

5. Dental implant (1) with implant extension (2) according to Claim 1 or 2, the material diameter of the constriction (6) being between 0.8 mm and 1.2 mm or preferably less than 1.0mm.

6. Dental implant (1) with implant extension (2) according to one or more of the above Claims, the material diameter of the constriction (6) being such that the constriction (6) breaks in case of a torsion less than 25 Ncm or less than 20 Ncm or less than 10 Ncm or less than 5 Ncm.

7. Dental implant (1) with implant extension (2) according to one or more of the above Claims, the constriction (6) being such that the material diameter of the first portion (3) continuously increases along the longitudinal axis starting at the end face of the apical end (1a) of the implant (1).

8. Dental implant (1) with implant extension (2) according to Claim 7, the material diameter of a first sub-portion of the first portion (3) of the implant extension (2), which directly borders on the end face of the apical end (1a), has a gradient with respect to the longitudinal axis of less than 35° and preferably 31° to 25°.

9. Dental implant (1) with implant extension (2) according to one or more of the above Claims, the dental implant (1) having threads between the apical end (1a) and the coronal end (1b) for screwing the dental implant (1) into a bone.

10. Dental implant (1) with implant extension (2) according to one or more of the above Claims, the groove (7) being formed with at least one edge toward the outside such that, for instance, elastic spring arms (31) or similar retention elements of a lid (10) with a passage in which the implant extension (2) can be inserted by sliding, can engage the groove so as to clamp the implant extension (2) in the passage; the edge at the same time limiting an annular area which extends perpendicularly to the longitudinal axis so as to form a barb function with the spring arms (31) or similar retention elements engaging therein.

11. Dental implant (1) with implant extension (2) according to one or more of the above Claims, the spline shaft portion (5) having at least one lateral plane portion or at least one spline shaft portion as a groove or a bulge along and around the longitudinal axis so as to form the anti-twist protection with a corresponding counterpiece.

12. Method of transporting an apically retained dental implant, **characterized in that** the dental implant is a dental implant (1) with implant extension (2) according to one or more of the above Claims 1 through 11 and **in that** for transport, the dental implant is apically retained at the implant extension.

13. Use of a dental implant (1) with implant extension (2) according to one or more of the above Claims 1 through 11 for apical retention of the implant in a transport container, in particular of a lid of the transport container.

14. Use according to Claim 13, the retention of the implant in the transport container or in the lid of the transport container exclusively occurring apically.

## Revendications

1. Implant dentaire (1) avec une extension d'implant (2), qui sont formés le long d'un axe longitudinal, dans lequel :
- l'implant dentaire (1) comprend une extrémité apicale (la), une extrémité coronaire (1b) et une partie (1c) pour recevoir et bloquer un pilier,
- l'extension d'implant (2) est formée d'un seul tenant avec l'implant (1) et s'étend en s'éloignant d'une face frontale de l'extrémité apicale (1a) le long de l'axe longitudinal,
- dans lequel l'extension d'implant (2) le long de l'axe longitudinal comporte une première partie (3) avec un rétrécissement annulaire (6) qui est directement relié à la face frontale de l'extrémité apicale (1a) de l'implant (1) et est formé comme un point de rupture programmée avec un diamètre de matériau si petit qu'en cas de flexion ou de torsion de l'implant (1) contre l'extension d'implant (2), l'implant (1) se casse à partir de l'extension d'implant (2) au niveau du rétrécissement (6),
**Caractérisé en ce que**
- l'extension d'implant (2) comporte, le long de l'axe longitudinal, à la suite de la première partie (3), une seconde partie (4) et une partie d'axe cannelé (5), dans lequel la seconde partie (4) et la partie d'axe cannelé (5) sont plus éloignées de l'implant (1) que la première partie (3),
- dans lequel la seconde partie (4) comporte, perpendiculairement à l'axe longitudinal, une gorge annulaire extérieure (7) qui est conçue pour maintenir l'extension d'implant (2) par un serrage de la gorge (7) en direction de l'axe longitudinal, et
- dans lequel la partie d'axe cannelé (5) est conçue pour maintenir l'extension d'implant (2) de manière bloquée en rotation autour de l'axe longitudinal.

2. Implant dentaire (1) avec une extension d'implant (2) selon la revendication 1, dans lequel la seconde partie (2) se situe le long de l'axe longitudinal entre la première partie (3) et la partie d'axe cannelé (5) .

3. Implant dentaire (1) avec une extension d'implant (2) selon la revendication 1, dans lequel la partie d'axe cannelé (5) se situe le long de l'axe longitudinal entre la première partie (3) et la seconde partie (4).

4. Implant dentaire (1) avec une extension d'implant (2) selon la revendication 1 ou 2, dans lequel le diamètre de matériau du rétrécissement (6) est compris entre 0,4 mm et 0,8 mm ou est de manière préférée inférieur à 0,7 mm ou est de manière encore plus préférée égal à 0,6 mm.

5. Implant dentaire (1) avec une extension d'implant (2) selon la revendication 1 ou 2, dans lequel le diamètre de matériau du rétrécissement (6) est compris entre 0,8 mm et 1,2 mm ou est de préférence inférieur à 1,0 mm.

6. Implant dentaire (1) avec une extension d'implant (2) selon une ou plusieurs des revendications précédentes, dans lequel le diamètre de matériau du rétrécissement (6) est formé de telle sorte que le rétrécissement (6) se casse à une torsion inférieure à 25 Ncm ou inférieure à 20 Ncm ou inférieure à 10 Ncm ou inférieure à 5 Ncm.

7. Implant dentaire (1) avec une extension d'implant (2) selon une ou plusieurs des revendications précédentes, dans lequel le rétrécissement (6) est formé de telle sorte que le diamètre de matériau de la première partie (3) augmente de manière continue le long de l'axe longitudinal à partir de la face frontale de l'extrémité apicale (1a) de l'implant (1).

8. Implant dentaire (1) avec une extension d'implant (2) selon la revendication 7, dans lequel le diamètre de matériau d'une première portion de la première partie (3) de l'extension d'implant (2), qui est directement adjacente à la face frontale de l'extrémité apicale (la), a une inclinaison par rapport à l'axe longitudinal inférieure à 35° et de préférence compris entre 31° et 25°.

9. Implant dentaire (1) avec une extension d'implant (2) selon une ou plusieurs des revendications précédentes, dans lequel l'implant dentaire (1) comporte, entre l'extrémité apicale (1a) et l'extrémité coronaire (1b), des filets de vis afin de visser l'implant dentaire (1) dans un os.

10. Implant dentaire (1) avec une extension d'implant (2) selon une ou plusieurs des revendications précédentes, dans lequel la gorge (7) est formée vers l'extérieur avec au moins un bord de telle sorte que, par exemple, des bras à ressort élastiques (31) ou des éléments de retenue analogues d'un couvercle (10), qui comporte un canal dans lequel l'extension d'implant (2) peut être insérée, peuvent s'engager dans la gorge afin de serrer l'implant dentaire (1) dans le canal, dans lequel le bord délimite en même temps une surface annulaire s'étendant perpendiculairement à l'axe longitudinal, afin de remplir une fonction d'ardillon avec les bras à ressort (31) ou les éléments de retenue analogues s'engageant dans celle-ci.

11. Implant dentaire (1) avec une extension d'implant (2) selon une ou plusieurs des revendications précédentes, dans lequel la partie d'axe cannelé (5) comporte, le long de l'axe longitudinal et tout autour de l'axe longitudinal, au moins une partie de plan latérale ou au moins une partie d'axe cannelé sous la forme d'une gorge ou d'une protubérance, afin d'entraîner le blocage en rotation avec une pièce complémentaire correspondante.

12. Procédé de transport d'un implant dentaire maintenu de manière apicale, **caractérisé en ce que** l'implant dentaire est un implant dentaire (1) avec une extension d'implant (2) selon une ou plusieurs des revendications 1 à 11 précédentes, et l'implant dentaire est maintenu de manière apicale sur l'extension d'implant pour le transport.

13. Utilisation d'un implant dentaire (1) avec une extension d'implant (2) selon une ou plusieurs des revendications 1 à 11 précédentes pour maintenir l'implant de manière apicale dans un récipient de transport, en particulier un couvercle du récipient de transport.

14. Utilisation selon la revendication 13, dans laquelle le maintien de l'implant dans le récipient de transport ou dans le couvercle du récipient de transport s'effectue de manière exclusivement apicale.
